**Europäisches Patentamt**

**European Patent Office**

**Office européen des brevets**

(11) Veröffentlichungsnummer: **0 331 898**
**A2**

(12) **EUROPÄISCHE PATENTANMELDUNG**

(21) Anmeldenummer: **89101723.8**

(22) Anmeldetag: **01.02.89**

(51) Int. Cl.⁴: **F16F 3/00 , F16F 15/04 , F16F 6/00 , G12B 3/04**

(30) Priorität: **09.03.88 DE 3807655**

(43) Veröffentlichungstag der Anmeldung:
**13.09.89 Patentblatt 89/37**

(84) Benannte Vertragsstaaten:
**DE FR GB**

(71) Anmelder: **ROBERT BOSCH GMBH**
**Postfach 10 60 50**
**D-7000 Stuttgart 10(DE)**

(72) Erfinder: **Kragl, Willi**
**Steinbeissstrasse 14**
**D-7016 Gerlingen(DE)**
Erfinder: **Müller, Hans-Georg, Dr. Dipl.-Ing.**
**Lerchenweg 7**
**D-7251 Weissach(DE)**
Erfinder: **Scharf, Friedrich, Dr. Dipl.-Phys.**
**Amundsenstrasse 32**
**D-7000 Stuttgart 40(DE)**
Erfinder: **Schnaidt, Winfried**
**Bannwaldweg 6**
**D-7016 Gerlingen(DE)**
Erfinder: **Wolf, Kuno, Dipl.-Phys.**
**Sonnenhalde 1**
**D-7455 Jungingen(DE)**

(54) **Vorrichtung zur Schwingungsdämpfung.**

(57) Es wird eine Vorrichtung zur Schwingungsdämpfung von zu isolierenden Massen vorgeschlagen, bei der durch eine spezielle Lagerung des Federsystems (12), das eine lineare Feder (14) und eine Magnerfeder (15) enthält, niedrige Reibungswerte erzielt werden.

Entweder ist zur Lagerung wengistens eine Membranfeder (44, 47) vorgesehen oder die zu isolierende Masse (11) ist hängend an der Federachse (17) angebracht, derart, daß die von der Masse (11) verursachte Kraft in Schwerkraftrichtung unterhalb der Feder (14) an dem Federsystem (12) angreift. Zur Halterung und Zentrierung des Federsystems (12) ist die Feder (14) als Druckfeder ausgebildet.

FIG. 2

## Vorrichtung zur Schwingungsdämpfung

Stand der Technik

Die Erfindung geht aus von einer Vorrichtung zur Schwingungsdämpfung von präzisionsmechanischen und präzisionsoptischen Anordnungen wie Meßtische, optische Bänke oder dergleichen nach der Gattung der Ansprüche 1 und 5.

Aus der DE-AS 18 05 789 ist ein nichtlineares Federsystem, bestehend aus der Parallelschaltung einer Feder mit linearer und einer Feder mit nichtlinearer Kennlinie bekannt, wobei die nichtlineare Feder als Magnetfeder ausgeführt ist. Mit solchen Federsystemen ist es möglich, große Lasten mit großer Weichheit aufzuhängen bzw. zu lagern, ohne daß dann die bei Verwendung linearer Federsysteme unvermeidlichen großen Federwege auftreten. Auf die Bedeutung des bekannten nichtlinearen Federsystems bei der erschütterungsfreien Lagerung von erschütterungsempfindlichen Massen ist in der Druckschrift hingewiesen.

Die bei der bekannten Magnetfeder durch Auslenkung entstehenden Kräfte werden von Magneten aufgebracht, die sowohl an dem feststehenden wie an dem beweglichen Teil der Feder angeordnet sind und die während des Federungsvorgangs geradlinig aneinander vorbeigeführt sind. Die Magnetfeder ist beispielsweise aufgebaut aus Innen- und Außenmagneten. Die Innenmagnete sind scheibenförmige achsialmagnetisierte Dauermagnete, während die Außenmagnete kreisringförmige, achsialmagnetisierte Dauermagnete sind.

Bei der Verwendung der bekannten Magnetfeder als Teil eines Federsystems zur Schwingungsdämpfung werden Lagerungen zur Führung der Innenmagnet-Anordnung in Bezug zur Außenmagnet-Anordnung der Magnetfeder benötigt. Die Isolierung von Schwingungen, die einen Frequenzbereich bis hinunter zu 1 bis 2 Hz umfassen, stellen besonders hohe Anforderungen an die Reibungsarmut der Lagerung. Versuchsweise wurden als Lager Kugellaufbüchsen eingesetzt, die in optimierter Ausgestaltung und bei sorgfältiger Schmierung noch Reibungskräfte von 0,1 bis 0,2 N aufwiesen. Beschleunigungskräfte mit vergleichbaren Werten ergeben sich bei Schwingungen im Bereich von 3 Hz und bei Schwingungsamplituden von 5 bis 10 μm und bei einer zu isolierenden Masse von 100 kg. Eine ausreichende Schwingungsisolierung war somit nicht mehr zu erreichen, weil die Schwingungskräfte die entgegenwirkenden Reibungskräfte nicht oder nur unzureichend überwinden konnten.

Bei der Verwendung einer Magnetfeder als Teil des Federsystems zur Schwingungsdämpfung tritt ein weiteres Problem auf, wenn sich die zu isolierende Masse ändert, da die Magnetfeder auf einen optimalen Arbeitspunkt eingestellt ist, der vorzugsweise in die Mitte des annähernd linearen Kennlinienverlaufs mit negativer Federsteifigkeit gelegt ist.

Aus der DE-PS 34 10 473 ist es bekannt, eine Einrichtung zum Einstellen des Arbeitspunkts vorzusehen, die ein elektrisches, pneumatisches oder hydraulisches Stellglied aufweist.

Aus der DE-PS 26 43 862 ist ein Elektromagnetventil bekannt, bei dem der Anker des Magnetventils durch zwei Blattfedern oder Membranfedern reibungsfrei gelagert ist.

Vorteile der Erfindung

Die erfindungsgemäße Vorrichtung zur Schwingungsdämpfung von präzisionsmechanischen und präzisionsoptischen Anordnungen wie Meßtische, optische Bänke oder dergleichen weist den Vorteil auf, daß auch kleinste Schwingungen mit Amplituden unter 10 μm bei Frequenzen bis hinunter zu 1 bis 2 Hz wirkungsvoll isoliert bzw. gedämpft werden.

In einem ersten Ausführungsbeispiel der erfindungsgemäßen Vorrichtung ist wenigstens eine Membranfeder zur Lagerung der Magnetfeder vorgesehen, die Bestandteil des nichtlinearen Federsystems aus einer Feder mit linearer Kennlinie und der Magnetfeder ist.

Die geforderte radiale Stabilität und die axiale Beweglichkeit werden vorteilhafterweise durch spiralförmige Ausnehmungen in den Membranfedern eingestellt. Eine bessere, symmetrische Kraftverteilung wird erhalten, wenn zwei oder mehr spiralförmige Ausnehmungen vorgesehen sind, deren Anfänge gleichmäßig auf dem Umfang der Membranfeder angeordnet sind.

Anstelle einer Membranscheibe je Lager werden vorzugsweise mehrere Scheiben verwendet. Aufeinanderfolgende Membranfedern werden vorzugsweise derart montiert, daß die Richtung der spiralförmigen Ausnehmungen wechselt. Dadurch wird die radiale Steifigkeit weiter erhöht.

In einer anderen Ausführung der erfindungsgemäßen Vorrichtung, in der ebenfalls ein nichtlineares Federsystem vorgesehen ist, das eine lineare Feder und eine Magnetfeder enthält, ist die zu isolierende Masse hängend an der Federachse angebracht, wobei zur Halterung und Zentrierung der Innenmagnete gegenüber den Außenmagneten der Magnetfeder die lineare Feder als Druckfeder ausgebildet ist. Der Vorteil dieser Ausführung ist eine extreme Reibungsarmut des Federsystems, die durch den Wegfall jeglicher Lagerung erreicht wird.

Damit bei zu großen unbeabsichtigten Seitenauslenkungen die Innenmagnete mit den Außenmagneten nicht direkt in Berührung kommen können, ist vorgesehen, die Innen- und/oder die Außenmagnete mit einem nichtmagnetischen Mantel zu überziehen. Unerwünschte seitliche Auslenkungen der Magnetfederachse werden eliminiert durch einen mit einer schiefen Auflagefläche versehenen Verstellring an der unteren Druckfeder-Auflage, indem die Druckfeder an der Stelle angehoben wird, wo sie zum größeren Nachgeben bzw. Einbiegen neigt.

Vorteilhafte Weiterbildungen und Verbesserungen der erfindungsgemäßen Vorrichtung sind in weiteren Unteransprüchen angegeben.

Wenn sich der Betrag der zu isolierenden schwingenden Masse ändert, ist es vorteilhaft, den Arbeitspunkt des Federsystems einstellbar auszugestalten. Mit dieser Maßnahme ist der Arbeitspunkt der Magnetfeder stets auf die Mitte des annähernd linearen Kennlinienbereichs mit negativer Federsteifigkeit zu legen, so daß eine symmetrische Auslenkung der Magnetfeder in beide Auslenkungsrichtungen möglich ist. Vorgesehen ist ein Antrieb, der beispielsweise elektromotorisch betätigbar ist. Vorzugsweise ist ein geregelter Linearantrieb vorgesehen, der wenigstens einen Positionsgeber enthält.

Die erfindungsgemäße Vorrichtung wird anhand der folgenden Beschreibung näher erläutert.

Zeichnung

Figur 1 zeigt eine erfindungsgemäße Vorrichtung zur Schwingungsdämpfung,

Figur 2 zeigt ein nichtlineares Federsystem als Teil der erfindungsgemäßen Vorrichtung gemäß Figur 1 und

Figur 3 zeigt eine Membranfeder, die in dem Federsystem gemäß Figur 2 enthalten ist.

Beschreibung der Ausführungsbeispiele

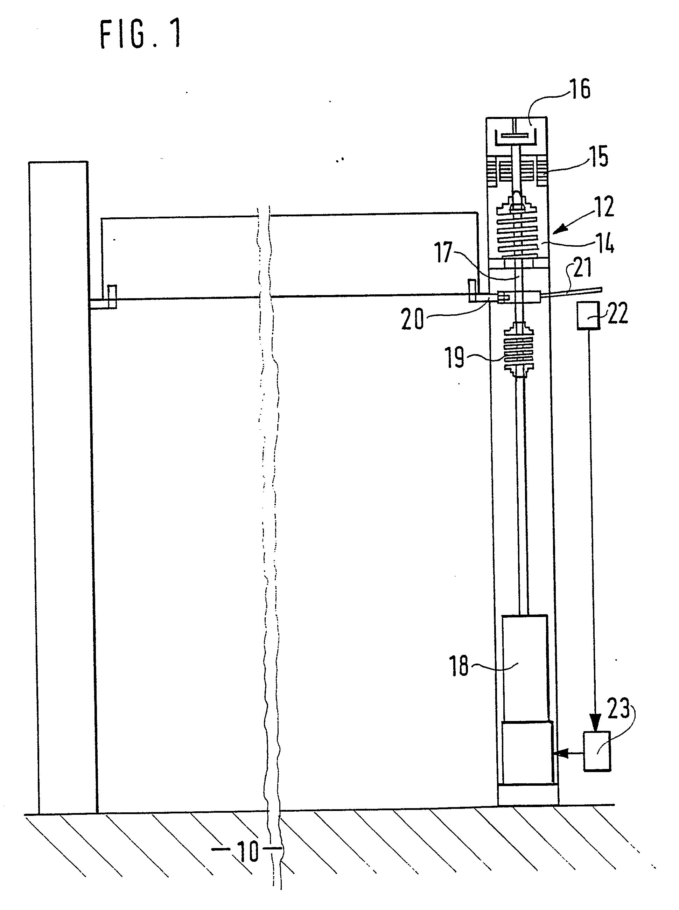

Figur 1 zeigt eine von einem schwingungsbehafteten Fundament 10 zu isolierende Masse 11. Die Masse 11 trägt beispielsweise präzisionsmechanische oder präzisionsoptische Anordnungen. Die Masse 11 wird von einem Federsystem 12 getragen, das beispielsweise in Stützen 13 angeordnet ist. Das Federsystem 12 umfaßt eine Feder 14 mit linearer Kennlinie, eine Magnetfeder 15 sowie gegebenenfalls einen Schwingungsdämpfer 16. Zwischen der Federachse 17 und einem Linearantrieb 18 ist eine Hilfsfeder 19 mit linearer Kennlinie angeordnet. Die Masse 11 ist über Träger 20 fest mit der Federachse 17 verbunden. Mit der Federachse 17 ist ferner ein Positionsanzeiger 21 verbunden, der die Verschiebung der Federachse 17 in axialer Richtung anzeigt. Der Positionsmarke 21 steht ein Positionsgeber 22 gegenüber, der die gemessene Position einem Steuergerät 23 des Linearantriebs 18 zuführt.

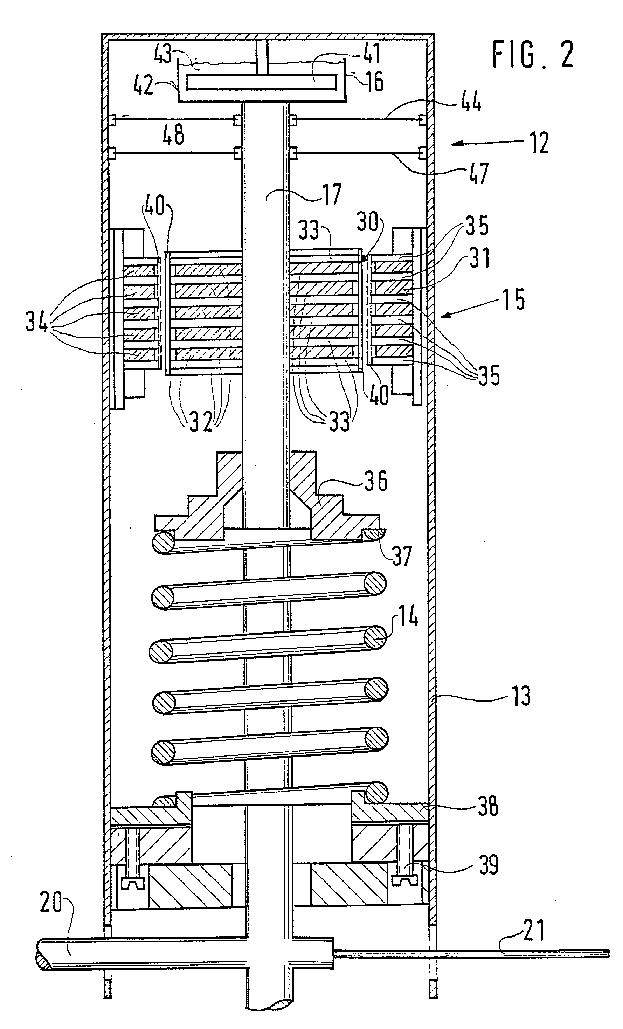

In Figur 2 ist das Federsystem 12 als Detail gezeigt. Diejenigen Teile in der Figur 2, die mit den in der Figur 1 gezeigten Teilen übereinstimmen, tragen dieselben Bezugszahlen.

Die Magnetfeder 15 setzt sich aus einem Innenteil 30 und einem Außenteil 31 zusammen. Das Innenteil 30 enthält mehrere scheibenförmige Magnete 32, die achsialmagnetisiert sind. Auf den Magneten 32 sind Weicheisenstücke 33 angeordnet. Das Außenteil 31 enthält kreisringförmige, achsialmagnetisierte Magnete 34, deren Anzahl mit der Anzahl der Magnete 32 des Innenteils 30 übereinstimmt. Die Magnete 34 des Außenteils 31 sind ebenfalls von Weicheisenstücken 35 voneinander getrennt.

In Figur 2 ist die Ruhelage der Magnetfeder 15 eingetragen, wobei sich gleichnamige Pole der Magnete 32 des Innenteils 30 und der Magnete 34 des Außenteils 31 genau gegenüberstehen. Dies ist die labile Gleichgewichtslage, wenn die Magnetfeder 15 isoliert betrachtet wird. Die angestrebte achsiale Verschiebung des Innenteils 30 bezüglich des Außenteils 31 beträgt in beiden Richtungen etwas weniger als ein Magnetsegment. Kurz vor der Verschiebung um genau ein Magnetsegment in die eine oder in die andere Richtung werden die Umkehrpunkte der Federkennlinie erreicht, bei der der Kennlinienteil mit negativer Federsteifigkeit wechselt in den Kennlinienteil mit positiver Federsteifigkeit. Beim Überschreiten dieses Punktes in die eine oder in die andere Richtung verhält sich die Magnetfeder 15 wie eine herkömmliche Feder mit einer positiven Federsteifigkeit, die eine stabile Gleichgewichtslage anstrebt, bei der sich ungleichnamige Pole gegenüberstehen. Ausgenützt wird im Normalfall der Teil der Kennlinie mit negativer Federsteifigkeit, der in Verbindung mit der Feder 14 mit linearer Kennlinie die gewünschte Gesamtkennlinie ergibt.

Das Gewicht der Masse 11 wird über den Träger 20 auf die Federachse 17 übertragen. Für die Abstützung der aufzunehmenden Last und die Zentrierung der Federachse 17 in der Stütze 13 ist die Federachse 17 mit einem Führungsring 36 versehen, der durch eine Einpassung 37 die Kraft auf die als Druckfeder ausgebildete Feder 14 überträgt und gleichzeitig die Achszentrierung übernimmt. Das andere Ende der Druckfeder 14 ist auf einem Verstellring 38 gelagert, dessen Ebene bezüglich eines auf der Federachse 17 errichteten Lots mit-

teils einer Vorrichtung 39 verstellbar ist. Im einfachsten Fall wird die Verstellvorrichtung 39 mit Schrauben realisiert, die den Verstellring 38 mehr oder weniger anheben. Mit dem Verstellring werden konstruktionsbedingte, unerwünschte seitliche Auslenkungen der Feder 14 eliminiert. Zu diesen Auslenkungen kann es kommen, wenn eine oder beide Auflageflächen der Druckfeder 14 nicht genau plangeschliffen sind und/oder wenn die Druckfeder 14 unter Druckbelastung aufgrund ihrer Eigenschaften nicht gleichmäßig zusammendrückt wird. Der Verstellring 38 und damit die Druckfeder 14 werden an der Stelle angehoben, wo die Druckfeder 14 zum größeren Nachgeben bzw. Einbiegen neigt.

Damit bei größeren unbeabsichtigten Seitenauslenkungen das Innenteil 30 mit dem Außenteil 31 der Magnetfeder 15 nicht direkt in Berührung kommt, sind die Magnete 32 des Innenteils 30 und/oder die Magnete 34 des Außenteils 31 mit einem nichtmagnetischen Mantel 40 überzogen. Der Mantel 40 verhindert zum einen magnetisches Aneinanderhaften der Innenteil- und Außenteilmagnete 32, 34 durch das Einhalten eines bestimmten Mindestluftspaltes und zum anderen das Verhaken des Innenteils 30 mit dem Außenteil 31.

Das Federsystems 12 weist gegebenenfalls den Schwingungsdämpfer 16 auf, der beispielsweise einen in einem Zylinder 42 angeordneten Kolben 41 enthält. Der Zylinder 42 enthält eine Flüssigkeit 43. Durch die Viskosität der Flüssigkeit und den Abstand zwischen dem Kolben 41 und Zylinder 42 wird die erforderliche Dämpfung festgelegt.

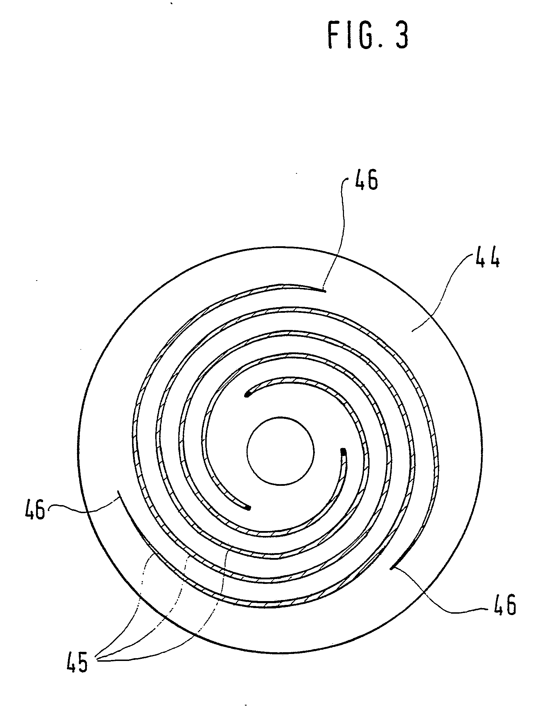

Gemäß der ersten Ausführung der erfindungsgemäßen Vorrichtung ist wenigstens eine Membranfeder 44 zur Lagerung der Federachse 17 vorgesehen, deren Ausgestaltung in Figur 3 gezeigt ist. Sie besteht beispielsweise aus dünnem Federstahl. Sie wirkt funktionell als Lager in Richtung der Federachse 17, wenn sie sowohl achsseitig als auch an der Stütze 13 fest eingespannt ist. Die Membranfeder 44 wird derart ausgelegt, daß bei ausreichender radialer Stabilität die erforderliche axiale Beweglichkeit eingehalten wird. Beide Eigenschaften sind eng miteinander gekoppelt. So bringen Durchmesservergrößerung und Dickenverkleinerung der Scheibe eine Zunahme der erwünschten axialen Flexibilität, gleichzeitig wird aber damit die radiale Stabilität verringert. Eine Einflußmöglichkeit auf die beiden Eigenschaften ist durch die Ausbildung wenigstens einer spiralförmigen Ausnehmung 45 gegeben. Vorzugsweise sind zwei oder mehr spiralförmige Ausnehmungen 45 vorgesehen, wobei die Anfänge 46 der Ausnehmungen 45 gleichmäßig auf dem Umfang der Membranfeder 44 verteilt sind. Die Ausnehmungen 45 erhöhen die axiale Flexibilität der Membranfeder 44. Gleichzeitig nimmt dabei geringfügig die Seitenstabilität ab, was sich aber durch eine geringe Scheibendickenerhöhung wieder ausgleichen läßt.

Anstelle einer Membranfeder 44 werden vorzugsweise zwei oder mehr Membranfedern 44, 47 verwendet. Eine weitere Erhöhung der Seitenstabilität wird erreicht, wenn aufeinanderfolgende Membranfedern 44, 47 in der Weise montiert werden, daß die Richtung der spiralförmigen Ausnehmungen 45 bei aufeinanderfolgenden Membranfedern 44, 47 wechselt. Zur Montage der Membranfedern 44, 47 werden beispielsweise Metallringe 48 verwendet, die einerseits fest mit der Federachse 17 und andererseits fest mit der Stütze 13 verbunden sind.

Wenn die erfindungsgemäße Vorrichtung gemäß der ersten Ausführung mit Membranfedern 44, 47 als Lager für die Federachse 17 eingesetzt wird, kann der Träger 20 an einer beliebigen Stelle mit der Federachse 17 verbunden sein. In Figur 1 ist es beispielsweise möglich, den Träger 20 zwischen Magnetfeder 15 und Druckfeder 14 oder zwischen Magnetfeder 15 und Schwingungsdämpfer 16 mit der Federachse 17 zu verbinden. Unter Verzicht auf den Schwingungsdämpfer 16 kann die Masse 11 auch unmittelbar auf der Federachse 17 gelagert sein, die zu diesem Zweck über die Stütze 13 hinaus verlängert ist.

Die erfindungsgemäße Vorrichtung ist derart ausgebildet, daß die zu isolierende Masse 11 hängend an der Federachse 17 angebracht ist, wobei die von der Masse 11 verursachte Kraft in Schwerkraftrichtung unterhalb der Druckfeder 14 an dem Federsystem 12 angreift. Die nach unten ziehende Schwerkraft bewirkt eine Stabilisierung des Feder-Massesystems 11, 12 und eine ausreichende Widerstandsfähigkeit gegenüber Seitenkräften. Das Weglassen der Membranfedern 44, 47 unter Verwendung der Federn 14 zur gleichzeitigen achsialen und radialen Kraftaufnahme führt zu einer weiteren Verringerung der Reibung und somit zu einer weiteren Verbesserung der Isolierung der Masse 11 gegenüber Schwingungen des Fundaments 10 bis zu Frequenzen unterhalb von 2 Hz.

Die Verstellung der Arbeitspunkts des Federsystems 12 ist auf mehrere Arten möglich. Eine erste Möglichkeit besteht darin, den in Figur 2 gezeigten Verstellring 38 in Richtung der Federachse 17 verschiebbar zu gestalten. Die Verkippung des Verstellrings 38 gegenüber der Federachse 17, die mit der Verstelleinrichtung 39 vorgegeben wurde, darf dabei nicht verändert werden. Die Verschiebung des Verstellrings 38 kann manuell oder mit Hilfe eines elektromotorischen Antriebs erfolgen. Bei dieser ersten Art der Einstellung des Arbeitspunkts muß von dem Verstellmechanismus das auf der Druckfeder 14 lastende Gewicht der Masse 11 mitgetragen werden.

Eine andere Möglichkeit der Verstellung des Arbeitspunkts des Federsystems 12 besteht darin, daß die Federachse 17 in axialer Richtung verschoben wird bis der gewünschte Arbeitspunkt eingestellt ist. Es kann eine manuelle, vorzugsweise aber eine elektromotorische Verstellung mit dem in Figur 1 gezeigten linearen Antrieb 18 vorgesehen sein.

Zur Entkopplung des mit dem Fundament 10 schwingenden Linearantriebs 18 und der Federachse 17, die mit der zu isolierenden Masse 11 verbunden ist, wird die Hilfsfeder 19 vorgesehen, die in Abhängigkeit von der Auslegung des Federsystems 12 als Zug- oder als Druckfeder ausgebildet ist. Wird bei der maximal zulässigen Erhöhung der zu isolierenden Masse 11 gerade der optimale Arbeitspunkt erreicht, so muß die Hilfsfeder 19 als Zugfeder ausgebildet sein, damit bei einer reduzierten Masse 11 das Federsystems 12 in Schwerkraftrichtung vorgespannt werden kann. Führt bereits jede Erhöhung der Masse 11, ausgehend von einem Mindestwert, zum Verlassen des Arbeitspunkts in Schwerkraftrichtung, so muß die Hilfsfeder 19 als Druckfeder ausgebildet sein, die eine Druckkraft in Gegenrichtung zur Schwerkraft auf das Federsystem 12 ausübt. In Verbindung mit dem elektrischen Linearantrieb 18 und einem Gebersystem, das die Positionsmarke 21 und den Positionsgeber 22 enthält, der ein Signal an das Steuergerät 23 abgibt, ist eine Arbeitspunktregelung gegeben.

Bei der beschriebenen erfindungsgemäßen Vorrichtung ist die zu isolierende Masse 11 fest mit der Federachse 17 verbunden. Es ist ohne weiteres möglich, die zu isolierende Masse 11 mit dem Außenteil 31 der Magnetfeder 15 bzw. mit der Stütze 13 zu verbinden, und die Federachse 17 als Tragachse mit dem Fundament 10 zu verbinden, wobei die Stützen 13 lediglich eine Gehäusefunktion übernehmen, und zusammen mit der zu isolierenden Masse 11 gegenüber dem Fundament 10 frei beweglich sind.

**Ansprüche**

1. Vorrichtung zur Schwingungsdämpfung von zu isolierenden schwingenden Massen mit präzisionsmechanischen oder präzisionsoptischen Anordnungen oder dgl., mit einem nichtlinearen Federsystem, das eine Parallelschaltung aus einer Feder mit linearer Kennlinie und einer Magnetfeder enthält, dadurch gekennzeichnet, daß zur Lagerung des Federsystems (12) wenigstens eine Membranfeder (44, 47) vorgesehen ist.

2. Vorrichtung nach Anspruch 1, dadurch gekennzeichnet, daß die Membranfeder (44, 47) eine Metallscheibe mit bestimmter Materialstärke ist, die wenigstens eine spiralförmige Ausnehmung (45) aufweist.

3. Vorrichtung nach Anspruch 2, dadurch gekennzeichnet, daß zwei oder mehr spiralförmige Ausnehmungen (45) vorgesehen sind, deren Anfänge (46) gleichmäßig auf dem Umfang der Membranfeder (44, 47) angeordnet sind.

4. Vorrichtung nach Anspruch 1, dadurch gekennzeichnet, daß zwei oder mehr Membranfedern (44, 47) je Lager vorgesehen sind, wobei die Richtung der spiralförmigen Ausnehmungen (45) bei aufeinanderfolgenden Membranfedern (44, 47) wechselt.

5. Vorrichtung zur Schwingungsdämpfung von zu isolierenden schwingenden Massen mit präzisionsmechanischen oder präzisionsoptischen Anordnungen oder dgl., mit einem nichtlinearen Federsystem, das eine Parallelschaltung aus einer Feder mit linearer Kennlinie und einer aus Innen- und Außenteilen zusammengesetzten Magnetfeder enthält, dadurch gekennzeichnet, daß die zu isolierende Masse (11) hängend an der Federachse (17) angebracht ist, derart, daß die von der Masse (11) verursachte Kraft in Schwerkraftrichtung unterhalb der Feder (14) mit linearer Kennlinie an dem Federsystems (12) angreift, wobei die Feder (14) zur Halterung und Zentrierung des Innenteils (30) gegenüber dem Außenteil (31) der Magnetfeder (15) als Druckfeder ausgebildet ist.

6. Vorrichtung nach Anspruch 5, dadurch gekennzeichnet, daß zwischen der Feder (14) und der Federachse (17) ein Führungsring (36) vorgesehen ist, der fest mit der Federachse (17) verbunden ist.

7. Vorrichtung nach Anspruch 5, dadurch gekennzeichnet, daß das Innenteil (30) und/oder das Außenteil (31) der Magnetfeder (15) im Luftspaltbereich mit einem nichtmagnetischen Mantel (40) überzogen sind.

8. Vorrichtung nach Anspruch 6, dadurch gekennzeichnet, daß die Feder (14) auf einem Verstellring (38) gelagert ist.

9. Vorrichtung nach Anspruch 1 oder 5, dadurch gekennzeichnet, daß die Federachse (17) mit einem Schwingungsdämpfer (16) verbunden ist.

10. Vorrichtung nach Anspruch 1 oder 5, dadurch gekennzeichnet, daß der Arbeitspunkt des Federsystems (12) mit einer auf die Feder (14) wirkenden Verstelleinrichtung (39) einstellbar ist.

11. Vorrichtung nach Anspruch 1 oder 5, dadurch gekennzeichnet, daß der Arbeitspunkt des Federsystems (12) mit einem auf die Federachse (17) wirkenden Antrieb (18) einstellbar ist.

12. Vorrichtung nach Anspruch 11, dadurch gekennzeichnet, daß zwischen Antrieb (18) und Feder (14) eine Hilfsfeder (19) angeordnet ist.

13. Vorrichtung nach Anspruch 10 oder 11, dadurch gekennzeichnet, daß der Antrieb (18) manuell betätigbar ist.

14. Vorrichtung nach Anspruch 10 oder 11, dadurch gekennzeichnet, daß ein geregelter Linearantrieb (18) vorgesehen ist und daß das Positions-Istsignal der Federachse (17) mit wenigstens einer Positionsmarke (21) und einem Positionsgeber (22) ermittelt wird.

# FIG.1

FIG. 2

# FIG. 3